# EUROPEAN PATENT APPLICATION

(11) **EP 4 650 316 A1**
(43) Date of publication of application: **19.11.2025**
(21) Application number: 24175761.6
(22) Date of filing: 14.05.2024
(51) Int. Cl.: B66C 13/08, B66C 1/24, B66C 23/42, B66C 13/18, A01G 23/00, B66C 1/68

(54) **A CRANE ARRANGEMENT AND A METHOD FOR CONTROL THEREOF**

(71) Applicant: Hiab AB, 215 32 Malmö (SE)
(72) Inventor: REHMAN, Bilal Ur, 824 56 Hudiksvall (SE)
(74) Representative: Zacco Sweden AB

(57) **Abstract**

The present disclosure relates to a crane arrangement (2) comprising a crane controller (200) for control of movement of a crane tool assembly (10) arranged at a second, free end of a crane boom system, said crane controller being arranged to receive a directional command for rotational displacement of the tool around its rotation axis, z_r, from an initial pointing direction, x0, of the direction indicator (11) of a tool (9) and to based thereon control at least one of said plurality of actuators to perform displacement of the tool around its rotation axis, z_r according to the directional command to a desired pointing direction, x1, of the direction indicator. The crane controller is further arranged to receive a drive command for movement of the crane tool assembly and to control at least one of said plurality of actuators to perform movement of the crane tool assembly along the desired pointing direction, x1, of the direction indicator (11) of the tool (9).

## Description

### TECHNICAL FIELD

The present disclosure relates to a crane arrangement and a method for control of movement of a crane tool assembly of said crane arrangement.

### BACKGROUND

Working equipment comprising a crane arrangements are widely used, some examples include loader cranes, forestry cranes and forestry equipment. Working equipment comprising crane arrangements are often mounted to vehicles such as trucks or lorries, for load handling purposes. Such load handling applications may include the following non-limiting examples; loading and unloading of timber from the load bed of a timber truck, loading and unloading goods (such as building material) from the load bed of a truck, various applications connected to collecting waste or material for recycling or in various construction or landscaping applications.

The crane arrangement generally comprises a crane base arranged to be mounted to e.g. a vehicle such as a truck or lorry, a crane pillar rotatably arranged to the crane base, and at least a first and a second crane boom pivotally arranged to each other wherein the first boom is further pivotally arranged at an end of the crane pillar. Further crane booms may then be arranged in sequence creating a moveable crane arm adapted to the type and application of the working equipment. The crane booms may be telescopic booms, comprising one or more telescopically extendable and retractable boom sections, or only comprising a single fixed boom structure. A crane tool such as a grip, grapple, hook or fork is typically arranged at the free end of a final crane boom, often referred to as the crane tip.

There is hence a number of individual parts of a crane arrangement that are movably arranged relative to each other. There is further a range of actuators, often hydraulic cylinders or motors, or even electrical actuators, that are actuating the movements of the different parts of the crane arrangement. There may be one or more actuators such as hydraulic cylinders or hydraulic motors to control the rotation, i.e. the slewing angle of the crane pillar, another actuator to control the pivoting angle of the first boom relative to the crane pillar and further an actuator to control the pivoting angle of the second boom relative the first boom and in a similar fashion other hydraulic actuators for other booms. The movements of the extendable and retractable boom sections of a telescopic boom may further be actuated by one or more hydraulic extension cylinders and the rotation or tilting angle of a tool at the crane tip may be controlled by further actuators.

The movements of the crane arrangement are governed by a crane controller generating operation signals for the operating the actuators of the crane arrangement. The crane controller is further typically arranged to monitor the safety of the movements of the crane arrangement and prevent movements that risk tipping the crane arrangement. A sensor system of e.g. angle sensors, pressure sensors, position sensors are typically connected to the crane controller to give input to the current positions and/or movements of the crane arrangement.

The crane controller may have an operator interface such as a remote maneuvering unit for the operator of the crane to enter crane commands. The operator may enter crane commands for movements for individual crane parts such as a slewing movement of the crane pillar, a pivoting movement of one or more crane booms, an extending or retracting movement of a telescopic boom or a rotation of a tool at the crane tip.

Further there are crane arrangements where the operator may enter crane commands for moving the crane tip without specifying how the individual crane parts should be moving. Such crane operation modes may be referred to as Crane Tip Control or Boom Tip Control, and this type of crane operation mode may e.g. enable the operator of the crane to move the crane tip along a vertical line without the need to individually control each crane part. In doing this, "inverse kinematics" are used, referring to a process of obtaining joint angles from coordinates for the crane tip.

EP 3345857 A1 discloses a method for controlling the crane of a working machine by using boom tip control. The crane comprises at least two booms connected to the working machine and each other in an articulated manner, which booms are moved in relation to the working machine and to each other by means of actuators controlled by a control system of the working machine. In accordance with the method, the direction and speed of motion of the head of the crane, controlled by the driver applying controls in the working machine, is implemented by applying speeds of the different booms of the crane.

### SUMMARY

As described above, the technology of Crane Tip Control using inverse kinematics is known. It is also from US 2020/0318316 known to automatically control a rotatory tool degree of freedom such that a current orientation of the tool with respect to the associated rotatory tool degree of freedom is automatically maintained.

Still, a coordination of certain movements of the crane arrangement and certain movements of the tool of the crane arrangement can place high demands on the operator of the crane arrangement.

There is hence a need to further improve the efficiency in the operation of the crane arrangement and more specifically to make it easier to control the movements of the crane arrangement for the operator to achieve the wanted operations.

First, an example where the tool is a pallet fork or a brick grabber is referred to. A load is loaded and/or unloaded from a load bed using the pallet fork or brick grabber. The operator is required to manipulate the tool so that the tool is aligned with the load. In the example where the tool is a pallet fork, this means that the operator manipulates the pallet fork so the opening of the fork is aligned with the pallet to be grabbed. This involves controlling, via the operator interface, a slewing angle of the crane arrangement in for example a plane of a platform of (for example a horizontal plane) perpendicular to the extension of the crane pillar, to control the position of the crane tip with the tool arrangement mounted thereto to by the pivoting movements of the first and second boom and further retraction an further retraction and extension movements of telescopic boom sections to ensure that there is not collision with the load bed or other obstacles around the load. In addition, the orientation of the pallet fork at the crane tip would need to be controlled.

Therefore, an operator will need to interact with several input command means, such as levers, joysticks, buttons, of the user interface at the same time, such as for control of slewing angle, articulation angles and boom extension/retraction. Further, the operator will need to interact with input command means for control of the tool (rotation, tipping, etc.). The number of input command means to be used by an operator may add up to for example 4 or 5 input command means.

In a second example, similar to the first example, a crane buckets or grapples is used for unloading a load in a way such that for example gravel is equally distributed in a straight line on the ground, such as for covering a ditch with pipes at a building site. The operator then has to control Individual movements of the respective crane parts and of the tool. Only expert operators can do this operation at high speed and with acceptable accuracy. On the other hand, inexperienced operators will need longer time and the accuracy may be poor.

Even for crane arrangements applying the prior crane tip control or boom tip control there is still a challenge for the crane operator to complete a work assignment with the tool at the crane tip in an efficient way due to the many, and sometimes concurrent, interactions that is still needed with the remote control unit to achieve a movement of the tool from a first position to a second position. Examples in which the complexity for this is increased include; if the closest distance between the points is needed for efficiency or if an obstacle needs to be circumvented for safety. The working site and working assignment affects the specifics of the required movements of the tool, and hence the crane arrangement, this puts high demands on the operator to be able to adapt the operation of the crane to the situation.

There are many other scenarios where the operator needs to interact with a plurality of input command means to control movement of tools of different types in applications involving other types of tools, such as brick grabs, pallet forks, rotator hooks, as well as application specific tools such as rotating brushes and many other types of tools.

An object of the present invention is to provide a working equipment comprising a crane arrangement wherein these high demands are mitigated, alleviated, or eliminated.

This has been achieved by means of a crane arrangement comprising
a crane base;
a crane pillar rotatably arranged to the crane base,
a crane boom system comprising a plurality of crane booms pivotally arranged in relation to each other, said crane boom system having a first end pivotally arranged at an end of the crane pillar and a second, free end, wherein at least one of the plurality of crane booms is extendable/retractable,
a crane tool assembly arranged at the second, free end of the crane boom system;
a plurality of actuators arranged to
   control extension/retraction of the at least one extendable/retractable crane boom,
   control a rotational position, v5, of the tool around its rotation axis, *z_r,*
   control a slewing angle, v1, of the crane pillar,
   control a pivotal angle, v2, between the crane pillar and the crane boom system, and
   control a pivotal angle, v3, between the crane booms pivotally arranged in relation to each other;

The crane tool assembly comprises a tool having a direction indicator. The crane arrangement comprises further a crane controller for control of movement of the crane tool assembly arranged at the second, free end of the crane boom system. The crane controller is arranged to receive a directional command for rotational displacement of the tool around its rotation axis, z_r, from an initial pointing direction, x0, of the direction indicator of the tool and to based thereon control at least one of said plurality of actuators to perform displacement of the tool around its rotation axis, *z*_*r* according to the directional command to a desired pointing direction, x1, of the direction indicator. The crane controller is further arranged to receive a drive command for movement of the crane tool assembly and to control at least one of said plurality of actuators to perform movement of the crane tool assembly along the desired pointing direction, x1, of the direction indicator (11) of the tool.

In an example, the desired pointing direction defines a movement plane.

In an example the movement plane is a horizontal movement plane. A height may be adjusted using a second directional command.

In an example, the movement plane is a tilted movement plane. An angle to the horizontal plane may then be adjusted using a third directional command.

In different embodiments, the crane controller is arranged to control the crane tool assembly to perform a forward movement orto perform a reverse movement along the desired pointing direction of the direction indicator. Optionally the drive command indicates either forward movement or reverse movement, wherein the crane controller is arranged to control the crane tool assembly to perform a forward movement or to perform a reverse movement according to the drive command.

In different embodiments, the drive command also comprises a speed indication wherein the crane controller is arranged to control the crane tool assembly to perform movement according to the speed indication.

In different embodiments, the crane controller is arranged to perform in sequence
receiving the directional command for rotational displacement of the tool around its rotation axis, z_r, and to based thereon control at least one of said plurality of actuators to perform the displacement of the tool according to the directional command to the desired pointing direction, x1, of the direction indicator, and
thereafter, upon receipt of a drive command, to control at least one of said plurality of actuators to perform movement of the crane tool assembly along the desired pointing direction, x1, of the direction indicator (11) as long as the drive command for movement along the desired pointing direction is active.

The crane controller may be arranged to receive a further directional command for rotational displacement of the tool around its rotation axis, z_r, to an updated desired pointing direction, x2, and to based thereon control at least one of said plurality of actuators to perform the commanded displacement to the updated desired pointing direction, x2, of the direction indicator. The crane controller is then arranged to activate control of the crane tool assembly to perform the movement along the updated desired pointing direction, x2, of the direction indicator of the tool at initiation of a further drive command activated after inactivation of the previously active drive command, and to continue the movement along the updated desired pointing direction, x2, as long as the further drive command is active.

The crane controller may further be arranged to receive the further drive command for rotational displacement of the tool around its rotation axis, z_r, to the updated desired pointing direction, x2, while the drive command for movement along the desired pointing direction is still active and to optionally also based thereon control at least one of said plurality of actuators to perform the commanded displacement to the updated desired pointing direction, x2, of the direction indicator while the previous drive command is still active.

In different embodiments, the crane controller is arranged to continuously receive directional commands for rotational displacement of the tool around its rotation axis, z_r, and to based thereon continuously control at least one of said plurality of actuators to perform the commanded rotational displacement to the corresponding desired pointing direction, x1, of the direction indicator, and to continuously control the crane tool assembly to perform the movement along the currently desired pointing direction of the direction indicator of the tool as long as the drive command is active.

In different embodiments the crane controller further comprises a steering planner arranged to receive the directional commands and to optionally receive the drive commands, and to determine a steering path of the crane tool assembly, said steering path comprising one or more positions along the desired pointing direction of the direction indicator of the tool, and an actuator controller arranged to control at least one of said plurality of actuators to execute movement according to the determined steering path of the crane tool assembly.

The actuator controller characteristically is arranged to control at least one of said plurality of actuators to control execution of the movement according to the determined steering path of the crane tool assembly using sensor information or otherwise obtained information relating to
- the extension/retraction state of the at least one extendable/retractable crane boom,
- the slewing angle, v1, of the crane pillar,
- the pivotal angle, v2, between the crane pillar and the crane boom system,
- the pivotal angle, v3, between the crane booms pivotally arranged in relation to each other, and
- optionally the rotational position, v5, of the tool around its rotation axis, z_r,

The actuator controller may be arranged to further control at least one of said plurality of actuators to adjust the rotational position, v5, of the tool around its rotation axis, *z_r,* during movement of the crane tool assembly along the commanded desired pointing direction, x1, of the direction indicator of the tool to always point along the steering path.

The steering planner may be continuously arranged to receive directional commands indicating right or left displacement and to update the steering path accordingly.

The steering path may be given as two - dimensional or three-dimensional coordinates in a coordinate system referenced to the crane base. The origin of the coordinate system is typically located at the crane base in the point where the typically vertical slewing axis of the crane pillar is mounted to the crane base. In an example, the crane base is mounted in a horizontal plane which horizontal plane also defining an xy-plane of the coordinate system. In an example, the crane base is tilted in relation to a horizontal plane. In an example, the tilted plane forms an xy-plane of the coordinate system. In another example, the xy plane of the coordinate system is a horizontal plane even though the crane base is tilted in relation to the horizontal plane. Further a reference direction in the xy-plane of the coordinate system is defined. For example, when the crane arrangement is positioned at a vehicle, the reference direction may be defined along a longitudinal extension of the vehicle.

In different embodiments, the crane controller comprises an operator interface having a first input command means operable for the drive command for the movement of the crane tool arrangement, and a second input command means operable for the directional command for the rotational displacement of the tool around its rotation axis, z_r. The operator interface may be implemented in a remote control unit.

In different embodiments, the direction indicator is an elongated part. For example, the elongated part forms part of the functional components of the tool. Alternatively, the elongated part is a separate part mounted to the tool to define the pointing direction of the tool.

Instead of or in addition to having an elongated part as a direction indicator, other direction indicators may be used. For example, a direction indicator may be painted or glued to the tool. In different embodiments, the crane tool assembly comprises a sensor arranged to sense the rotational position of the tool around its rotation axis, *z_r.*

The present disclosure further relates to a remote control unit comprising an operator interface for control of a crane tool assembly of a crane arrangement as defined in above. The operator interface comprises
a first input command means for drive commands for movement of the crane tool assembly, and
a second input command means for directional commands for rotational displacement of the tool around its rotation axis, z_r,
so as to enable control the crane tool assembly to perform movement according to the drive commands using the first input command means along a desired pointing direction, x1, of the direction indicator of the tool as displaced using the second input command means.

The first and/or second input command means may comprise a lever or joystick or button.

The present disclosure further relates to a method for control of movement of a crane tool assembly of a crane arrangement (2), said crane arrangement comprising
a crane base;
a crane pillar rotatably arranged to the crane base,
a crane boom system comprising a plurality of crane booms pivotally arranged in relation to each other, said crane boom system having a first end pivotally arranged at an end of the crane pillar and a second, free end, wherein at least one of the plurality of crane booms is extendable/retractable,
a crane tool assembly arranged at the second, free end of the crane boom system;
a plurality of actuators arranged to
   control extension/retraction of the at least one extendable/retractable crane boom,
   control a rotation of the tool around its rotation axis, *z_r,*
   control a slewing angle, v1, of the crane pillar,
   control a pivotal angle between the crane pillar and the crane boom system,
   control a pivotal angle, v3, between the crane booms (4, 5) pivotally arranged in relation to each other; and
wherein said crane tool assembly comprises a tool having an direction indicator.

The method comprises
receiving a directional command for rotational displacement of the tool around its rotation axis, z_r, from an initial pointing direction, x0, of the direction indicator (11) of the tool (9),
controlling at least one of said plurality of actuators to perform displacement of the tool around its rotation axis, *z*_*r* according to the directional command to a desired pointing direction, x1, of the direction indicator,
receiving a drive command for movement of the crane tool assembly, and
controlling at least one of said plurality of actuators to perform movement of the crane tool assembly along the desired pointing direction, x1, of the direction indicator of the tool.
at least some of the embodiments above enables operating a crane using a tool as guidance or lever in a Crane Tip Control, CTC mode of operation, where the direction of the tool gives guidance to the direction of movement of the crane tip.

An advantage with this solution according to at least some of the embodiments is that it increases the ease of operability for crane operators.

The complexity of an operator interface of the crane arrangement can be reduced, as the operator only uses a first input command means for command for movement of the tool and a second input command means for rotational displacement of the tool around its rotation axis. Consequently, the need for training of operators may be reduced and/or efficiency in operation of the crane arrangement may be increased.

At least some embodiments of this invention enables a step-wise or continuous movement of the crane tool assembly guided by the pointing direction of the direction indicator of the tool.

Also, the solution is also suitable to implement in semi-automatic operation scenarios.

### BRIEF DESCRIPTION OF THE DRAWINGS

The foregoing will be apparent from the following more particular description of examples, as illustrated in the accompanying drawings in which like reference characters refer to the same parts throughout the different views. The drawings are not necessarily to scale, emphasis instead being placed upon illustrating the examples.
Figures 1a-1b is a schematic illustration of an example working equipment.
Figure 2 is a block scheme illustrating an example crane controller.
Figures 3-6 illustrate a top view of an example of operation of a working equipment.
Figure 7 illustrates another example of operation of a working equipment.
Figure 8 illustrates schematically a term "movement plane" as used herein.
Figure 9 schematically illustrates an example of an operator interface.
Figure 10 is a flow chart illustrating an example of a method for control of movement of a crane tool assembly of a crane arrangement.

### DETAILED DESCRIPTION

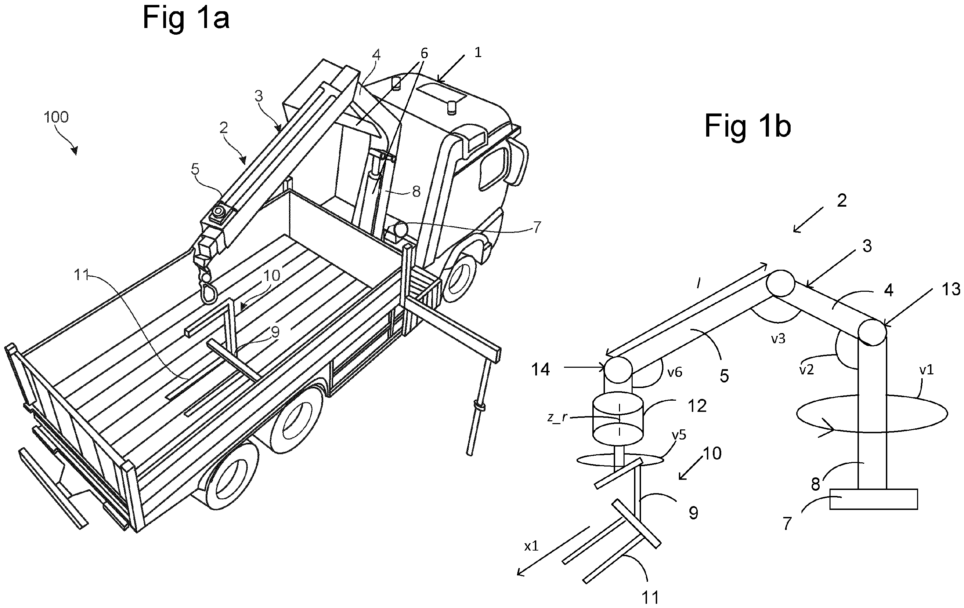

Figure 1a-b illustrates a crane arrangement 2 mounted to a working equipment 100 and further installed to a vehicle 1.

The working equipment 100 is in the illustrated example installed on a vehicle 1 such as a truck or lorry. The working equipment 100 and vehicle 1 may be for load handling purposes.

Such load handling applications may include the following non-limiting examples; loading and unloading timber from the load bed of a timber truck, loading and unloading goods (such as building material) from the load bed of a truck, various applications connected to collecting waste or material for recycling or in various construction or landscaping applications.

However, the working equipment 100 may form part of any other vehicle installation for other purposes.

The crane arrangement 2 is for example a loader crane or a forestry crane.

The crane arrangement 2 generally comprises a crane base 7 mounted to the vehicle 1. The mounting of the crane base 7 to the vehicle 1 includes that the crane base is fastened to or integrated with the vehicle 1. The crane arrangement 2 further comprises a crane pillar 8 rotatably arranged to the crane base 7. The crane base 7 is in one example mounted to a horizontal surface of a chassis of the vehicle 1. In an alternative example, the crane base may be mounted to a surface of the chassis of the vehicle 1 having an angle in relation to a horizontal plane. A stabilizer beam and legs (not shown) may be arranged to set the crane base in position.

The crane pillar is characteristically an elongated part. Typically, the crane pillar is vertically arranged. However, the crane pillar may instead extend along an axis having an angle > 0 in relation to the vertical axis.

The crane arrangement 2 further comprises a crane boom system 3 comprising a plurality of crane booms 4, 5 pivotally arranged in relation to each other. The crane boom system 3 has a first end 13 pivotally arranged at an end of the crane pillar 8 and a second, free end 14. The plurality of crane booms comprises in the illustrated example a first crane boom 4 pivotally arranged at the end 13 to the end of the crane pillar 8. The plurality of crane booms further comprises a second crane boom 5 having the free end 14. Thus, in the illustrated example, the crane boom system comprises two crane booms. However, the crane boom system may comprise more booms such as three or more booms. The crane arrangement 2 may as an example include a third boom with telescopic capabilities making it extendable/retractable. This type of additional third boom may be referred to as a "jib" when discussing applications where the crane arrangement 2 is part of a loader crane. A jib is often used in loader cranes for extending the reach of the crane.

Characteristically, at least one of the plurality of crane booms 4, 5 of the crane boom system 3 is extendable/retractable. A common set-up is a crane base having a third, expandable/retractable crane boom (not shown). In the illustrated example, the second boom 5 is extendable/retractable. For example, the second boom is telescoping. A present length or extension state of the second boom as 5 is in the illustrated example denoted I. In an alternative example, the length of the second boom is fixed. The length of the first boom 4 is in the illustrated example fixed. Alternatively, the first boom 4 is extendable/retractable. For example, the first boom is telescoping.

The crane arrangement 2 comprises further a tool assembly 10 comprising a rotator 12 and a tool 9. The rotator 12 and the tool 9 may be integrated into one unit or alternatively form individual and detachable parts of the tool assembly 10.The rotator 12 is arranged to rotate the tool around a rotation axis *z_r* of the tool. The tool assembly 10 is arranged at the second, free end of the crane boom system 3. The tool assembly 10 may be detachably arranged at the boom arrangement 2. Accordingly, the tool 9 or the tool assembly 10 may be substitutable. Thus, a tool appropriate for the situation can be used. Crane tools include; grapples, brick grabs, forks, hooks, and also application specific tools, e.g. for lifting recycling bins and other load carrying objects.

In the illustrated example, the crane tool arrangement 10 is arranged at the free end of the second crane boom. The second, free end 14 of the crane boom system 3 is often referred to as a crane tip.

In the illustrated example, the first and second crane booms are pivotally arranged in relation to each other. In an example, the first and second crane booms are directly connected to each other in a pivot point. In another example, the plurality of crane booms comprises one or more pivotally mounted intermediate crane booms arranged between the first and second crane booms. Accordingly, the plurality of crane booms are arranged in sequence creating a moveable crane arm adapted to the type and application of the working equipment.

The at least one extendable/retractable crane boom may be a telescopic boom, comprising one or more telescopically extendable and retractable boom sections.

There is hence a number of individual parts of a crane arrangement 2 that are movably arranged relative to each other.

The crane arrangement further comprises a plurality of actuators, arranged to
control extension/retraction of the at least one extendable/retractable crane boom,
control a rotational position, v5, of the tool around its rotation axis, *z_r,*
control a slewing angle, v1, of the crane pillar,
control a pivotal angle, v2, between the crane pillar and the crane boom system, and
control a pivotal angle, v3, between the crane booms (4, 5) pivotally arranged in relation to each other and in a similar fashion the pivotal angle between further optional booms.

The actuators may further be arranged to control a tilt angle v6 between the tool assembly and the boom system 2. Alternatively, the tilt angle v 6 is fixed or arranged to be aligned with gravity.

The plurality of actuators may be any form of actuator suitable for the application. Often hydraulic cylinders 6 or motors, or even electrical actuators, which are arranged to actuate the movements of the different parts of the crane arrangement are used. For example, a hydraulic system may be provided comprising pump and valves to govern hydraulic cylinders. There may be one or more hydraulic cylinders or hydraulic motors to control the rotation, i.e. the slewing angle v1 of the crane pillar, another hydraulic actuator to control the pivoting angle of the crane boom system relative to the crane pillar and further hydraulic actuators to control the pivoting angle of the crane booms of the crane boom system relative to each other. The movements of the extendable and retractable boom sections of a telescopic boom may further be actuated by one or more hydraulic extension cylinders. As noted earlier, electrical actuators may be used and one or more of the hydraulic actuators in the above example may alternatively be exchanged with an electrical actuator.

As is clear from the above, the slewing angle v1 of the crane pillar in relation to the crane base can be measured and controlled.

Further, as is clear from above, the crane base may be mounted in a horizontal plane which horizontal plane also defines an xy-plane of the coordinate system. In an example, the crane base is tilted in relation to a horizontal plane. In an example, the tilted plane forms an xy-plane of the coordinate system. In another example, the xy plane of the coordinate system is a horizontal plane even though the crane base is tilted in relation to the horizontal plane. Further a reference direction in the xy-plane of the coordinate system is defined. For example, when the crane arrangement is positioned at a vehicle 1, the reference direction may be defined along a longitudinal extension of the vehicle 1. The slewing angle v1 may then be referenced to this reference direction.

Further a sensor system or the like is used for providing information relating to angles and extension/retraction states.

Thus, a rotational or angular position, v1, forming the slewing angle v1, in relation to a reference direction is characteristically known. For example, a sensor of any type may be arranged to sense the rotational position, and consequently, the slewing angle of the crane pillar. For example an angle sensor can be used for measuring the slewing angle or a pivoting angle. Alternatively, the sensor may comprise a pressure sensor arranged to obtain a signal related to at least one hydraulic pressure related to a lifting cylinder, or a rotary position sensor or a linear extension position sensor.

Alternatively the rotational position, and consequently the slew angle, is known without use of a dedicated sensor. For example an applied hydraulic pressure to a hydraulic arrangement controlling the rotational position of the crane boom system may correspond to the rotational position. Alternatively the rotational position is known from a rotational position of a motor controlling the angle.

Further, the pivotal angle, v2, between the crane pillar 8 and the crane boom system 3 is characteristically known. For example, a sensor of any type may be arranged to sense the rotational position of the crane boom system, and consequently, the pivotal angle, v2 between the crane pillar 8 and the crane boom system 3. For example an angle sensor can be used for measuring the pivotal angle, v2, between the crane pillar 8 and the crane boom system 3. Alternatively the rotational position, and consequently the pivotal angle, v2 between the crane pillar 8 and the crane boom system 3, is known without use of a dedicated sensor. For example an applied hydraulic pressure to a hydraulic arrangement controlling the pivotal angle, v2 between the crane pillar 8 and the crane boom system 3 may correspond to the pivotal angle, v2. Other examples of means for obtaining the pivotal angle, v2, can be found in the examples related to the slewing angle v1 above.

Further, the pivotal angle, v3, between adjacent crane booms 4, 5 pivotally arranged in relation to each other is characteristically known. For example, a sensor of any type may be arranged to sense the pivotal angle, v3, between adjacent crane booms 4, 5 pivotally arranged in relation to each other. For example an angle sensor can be used for measuring the pivotal angle, v3. Alternatively the rotational position, and consequently the pivotal angle, v3 between adjacent crane booms is known without use of a dedicated sensor. For example an applied hydraulic pressure to a hydraulic arrangement controlling the pivotal angle, v3. Other examples of means for obtaining the pivotal angle, v3, between adjacent crane booms can be found in the examples related to the slewing angle v1 above.

Further, the extension/retraction of the at least one extendable/retractable crane boom is characteristically known. Rope sensors or magnetostrictive linear position sensors are examples of sensors for the linear boom extension position/length.

Further, the tilt angle v6 between the tool assembly and the crane boom system 3 may be known. Examples of means for obtaining the tilt angle, v6, can be found in the examples related to the slewing angle v1 above.

Now, the configuration of the tool 9 will be described more in detail. The tool has a direction indicator 11. The direction indicator may be an elongated part. For example, the elongated part forms part of the functional components of the tool, such as in case of a fork where the fork itself is an elongated part. Alternatively, the elongated part is a separate part mounted to the tool to define the pointing direction of the tool. Accordingly, in the case of a hydraulic hook an elongated part may be added to define a pointing direction x1 of the tool.

Instead of or in addition to having an elongated part as a direction indicator, other direction indicators may be used. For example, a direction indicator may be painted or glued to the tool.

The direction indicator, for example designed as an elongated part 11 of the tool 9 defines a pointing direction x1 of the tool 9. The direction indicator will hence be visible for an operator of the working equipment performing a working assignment involving the tool 9.

The crane arrangement 2 comprises further a crane controller (not shown in figures 1a, 1b) arranged to control said plurality of actuators. The crane controller is in an example arranged at the working equipment. In another example, the crane controller is at least in part arranged at a remote location.

The movements of the crane arrangement 2 are governed by the crane controller generating operation signals for the operating the actuators of the crane arrangement. The crane controller is further typically arranged to monitor the safety of the movements of the crane arrangement and prevent movements that risk tipping the crane arrangement.

The crane controller has an operator interface such as a remote maneuvering unit for the operator of the crane arrangement to enter crane commands. The operator may enter crane commands for movements for individual crane parts such as a slewing movement of the crane pillar, a pivoting movement of a crane boom, an extending or retracting movement of a telescopic boom or a rotation of a tool at the crane tip.

In an example, the crane controller may be arranged to operate in a plurality of modes of operation. In the first mode of operation, as described above, the operator may enter the crane commands for movements for individual crane parts such as a slewing movement of the crane pillar, a pivoting movement of a crane boom, an extending or retracting movement of a telescopic boom or a rotation of a tool at the crane tip.

In said first, manual mode of operation, the slewing angle v1 can be controlled by an operator using a corresponding control, such as lever/accelerator, via an operator interface of a crane controller (not shown in figures 1a and 1b).

Further, in said first, manual mode of operation, the pivotal angle, v2, can be controlled by an operator using a corresponding control, such as lever/accelerator, via the operator interface of a crane controller (not shown in figures 1a and 1b)

Further, in said first, manual mode of operation, the pivotal angle(s), v3, between the crane booms (4, 5) pivotally arranged in relation to each other can be controlled by an operator using a corresponding control, such as lever/accelerator, via the operator interface of a crane controller (not shown in figures 1a and 1b)

Further, in said first, manual mode of operation, the extension/retraction of the at least one extendable/retractable crane boom can be controlled by an operator using a corresponding control, such as lever/accelerator, via the operator interface of a crane controller (not shown in figures 1a and 1b).

Further, the operator interface of the crane controller (not shown in figures 1a and 1b) also comprises means for controlling a rotational position, v5, of the tool around its rotation axis, *z_r,* by an operator using a corresponding control, such as lever/accelerator, via an operator interface of a crane controller (not shown in figures 1a and 1b).

Further, the operator interface of the crane controller may also comprise means for controlling a tilt angle v6 between the tool assembly and the crane boom system 3 by an operator using a corresponding control, such as lever/accelerator, via an operator interface of a crane controller (not shown in figures 1a and 1b).

The plurality of modes of operation may further comprises a second mode of operation wherein the operator interface is adapted for operator entry of crane commands for moving the crane tip without specifying how the individual crane parts should be moving. Such crane operation command mode may be referred to as Crane Tip Control or Boom Tip Control, and this type of crane operation mode may e.g. enable the operator of the crane to move the crane tip along a vertical line without the need to individual control each crane part.

The first and second modes of operation are known in the art.

In a third mode of operation, the crane controller is arranged to receive commands, for example operator commands, for control of the orientation and position of the crane tool 9 arranged at the second, free end of the crane boom system. In detail, the crane controller 200 is arranged to receive a directional command for rotational displacement of the tool around its rotation axis, z_r, from an initial pointing direction, x0, of the direction indicator 11 of the tool 9 and to based thereon control at least one of said plurality of actuators to perform displacement of the tool around its rotation axis, *z*_*r* according to the directional command to a desired pointing direction, x1, of the direction indicator. The crane controller is further arranged to receive a drive command for movement of the crane tool assembly and to control at least one of said plurality of actuators to perform movement of the crane tool assembly along the desired pointing direction, x1, of the direction indicator 11 of the tool 9.

Thus, the directional command is intended for rotational displacement of the tool around its rotation axis, z_r, from the initial pointing direction, x0, of the direction indicator 11 of the tool 9 for a clockwise or counter-clockwise rotation in relation to its initial pointing direction. As the desired pointing direction x1 of the tool indicates a movement path for the tool, the movement path x1 for the tool can be adjusted by rotational displacement of the tool around its rotation axis z_r in relation to a present rotational position of the tool.

The crane controller may be arranged to control the crane tool assembly to perform a forward movement or to perform a reverse movement along the desired pointing direction of the direction indicator. In an example, the drive command may indicate either forward movement or reverse movement, wherein the crane controller is arranged to control the crane tool assembly to perform a forward movement or to perform a reverse movement according to the drive command.

The drive command may also comprise a speed indication wherein the crane controller is arranged to control the crane tool assembly to perform movement according to the speed indication.

The crane controller is arranged to control the actuators to actuate the forward/backward movement of the tool along the movement path as determined by the desired pointing direction of the direction indicator of the tool. Thus, it is the crane controller which determines instructions for control of the actuators to move the crane tool assembly in accordance with the pointing direction of the direction indicator of the tool..

Accordingly, the crane controller is in communication with the sensors at the actuators and/or directly with the actuators to provide information relating to a present setting of the actuators or alternatively with a system, such as a hydraulic system, that operate together with the actuators. Further, the crane controller is arranged to determine future settings of the actuators to control the tool along the forward/backward movement path defined by the pointing direction x1. The crane controller is arranged to control the actuators to said settings.

An operator interface may comprise manipulators, such as one or more switches, to switch between the first, second and third modes of operation or alternatively between the first and third mode if no second mode is implemented.

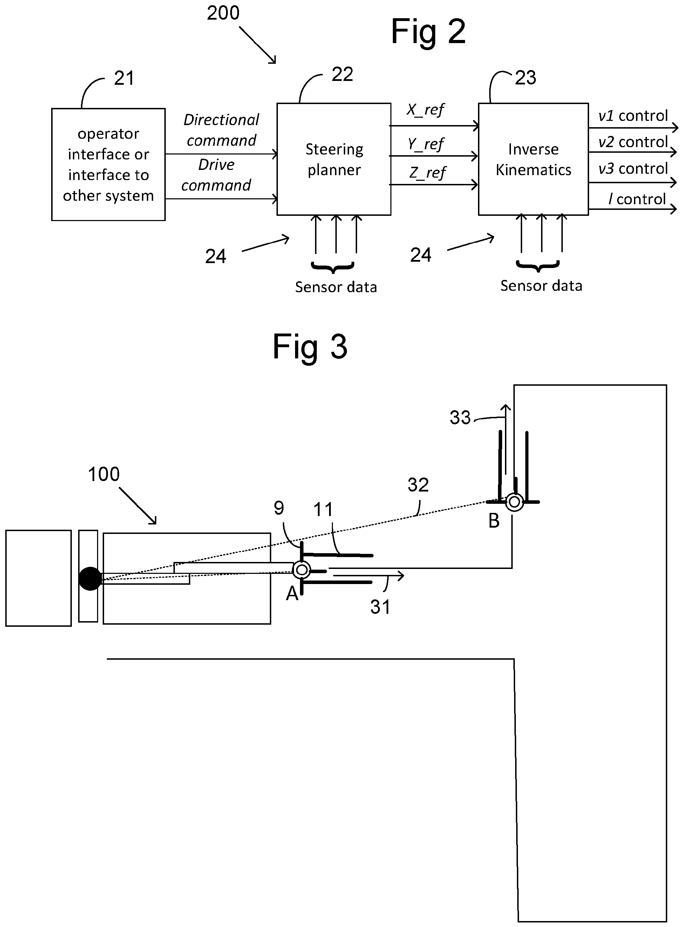

Figure 2 illustrates an example of the crane controller 200 as presented above. The crane controller 200 is arranged to control the crane arrangement 2 according to operator commands or via control from another control system. Thus, the control can be manual, semi-automatic or automatic. The crane controller 200 may be used for control in different modes of operation, for example the first, second, and/or third modes of operation as discussed above. Below, focus will be on the third mode of operation.

The crane controller 200 characteristically comprises at least one processor and program code which when executed by the processor performs the functionality here discussed.

The crane controller 200 may be arranged to perform in sequence
receiving the directional command for rotational displacement of the tool around its rotation axis, z_r, and to based thereon control at least one of said plurality of actuators to perform the displacement of the tool according to the directional command to the desired pointing direction, x1, of the direction indicator, and
thereafter, upon receipt of a drive command, to control at least one of said plurality of actuators to perform movement of the crane tool assembly along the desired pointing direction, x1, of the direction indicator 11 as long as the drive command for movement along the desired pointing direction is active.

Thus, for example, an operator can, in accordance with this example, adjust the pointing direction of the direction indicator until the tool is oriented as desired. Thereafter, when the operator activate the drive command, movement of the crane tool assembly along the desired pointing direction, x1, of the direction indicator 11 is executed as long as the drive command for movement along the desired pointing direction is active.

With this solution, the crane tool assembly is set to move in an original pointing direction, with reference to a coordinate system at the crane base. Thus, it is like a snapshot of the direction of the tool when the movement starts. This linear direction will be kept as long as for example a lever for movements in forward or reverse direction is actuated. This allows for the operator to change the direction of the tool while moving the crane tool arrangement to prepare for the next movement/operation. Further, when the operator stops pulling the lever for movement, the desired pointing direction can be updated to a pointing direction at that point in time. This is one implementation example with the advantage of the operator being able to adjust and prepare the direction of the tool for the target position without affecting the movement direction of the crane tip.

As is clear from above, the crane controller may be arranged to receive a further directional command for rotational displacement of the tool around its rotation axis, z_r, to an updated desired pointing direction, x2, and to based thereon control at least one of said plurality of actuators to perform the commanded displacement to the updated desired pointing direction, x2, of the direction indicator. The crane controller is then arranged to activate control of the crane tool assembly to perform the movement along the updated desired pointing direction, x2, of the direction indicator of the tool at initiation of a further drive command activated after inactivation of the previously active drive command, and to continue the movement along the updated desired pointing direction, x2, as long as the further drive command is active. The crane controller may even be arranged to receive the further drive command for rotational displacement of the tool around its rotation axis, z_r, to the updated desired pointing direction, x2, while the drive command for movement along the desired pointing direction is still active and to optionally also based thereon control at least one of said plurality of actuators to perform the commanded displacement to the updated desired pointing direction, x2, of the direction indicator while the previous drive command is still active.

In another example, instead of the sequential procedure described above, the crane controller is arranged to continuously control the crane tool assembly to perform the movement along the currently desired pointing direction of the direction indicator. In accordance with this example, the crane controller 200 may be arranged to continuously receive directional commands for rotational displacement of the tool around its rotation axis, z_r, and to based thereon continuously control at least one of said plurality of actuators to perform the commanded rotational displacement to the corresponding desired pointing direction, x1, of the direction indicator, and to continuously control the crane tool assembly to perform the movement along the currently desired pointing direction of the direction indicator of the tool as long as the drive command is active. An extended version of the continuous control will also be described below.

The crane controller 200 may be arranged to receive commands, for example from an operator via a selector, such as a switch, to select either the sequential procedure control or the continuous control.

Now, a design of the crane controller will be described in relation to the illustrated example. In the illustrated example, the crane controller 200 comprises a steering planner 22 arranged to receive the directional commands. The directional commands are characteristically commands for displacement of the rotational position, v5, of the tool around its rotation axis, *z_r.* The rotational position, v5, characteristically defines as an angle v5, of the rotator 12.

The steering planer 22 is also arranged to receive the drive commands. The drive commands are in its simplest form an activation command providing an on/off functionality. In an extended form, the drive command can also comprises forward/reverse selection component. The drive command may in addition thereto or instead comprise a speed indication. In an example, the speed indication is an indication to increase/decrease speed in relation to a current speed of the crane tool arrangement.

In an example, the desired pointing direction defines a movement plane. In an example the movement plane is a horizontal movement plane. In an example, the height of the movement may be adjusted using a second directional command. In an example, the movement plane is a tilted movement plane. An angle to the horizontal plane may then be adjusted using a third directional command.

The steering planer 22 is arranged to determine a steering path of the crane tool assembly. The steering path comprises one or more positions along the desired pointing direction of the direction indicator of the tool. The steering path may be given as two-dimensional X_ref, Y_ref or three-dimensional coordinates X_ref, Y_ref, Z_ref in a coordinate system referenced to the crane base. The origin of the coordinate system is typically located at the crane base in the point where the typically vertical slewing axis of the crane pillar is mounted to the crane base. In an example, the crane base is mounted in a horizontal plane which horizontal plane also defining an xy-plane of the coordinate system. In an example, the crane base is tilted in relation to a horizontal plane. In an example, the tilted plane forms an xy-plane of the coordinate system. In another example, the xy plane of the coordinate system is a horizontal plane even though the crane base is tilted in relation to the horizontal plane. Further, a reference direction in the xy-plane of the coordinate system is defined. For example, when the crane arrangement is positioned at a vehicle, the reference direction may be defined along a longitudinal extension of the vehicle.

In a first example, where the coordinates are two-dimensional coordinates, the third coordinate, characteristically height, is not taken into account, and the tool can be controlled along the movement path at any height.

In a second example, wherein the coordinates are also two-dimensional coordinates, the tool can be adapted to be controlled along the movement path at a predetermined or set height or at the current height, wherein the current height could be controlled through another input over the interface to the crane controller. The crane tip and tool may hence be operated in a straight vertical line as well using the CTC functionality, as described in prior art.

In a third example, wherein the coordinates are three-dimensional coordinates, the path controller may also use information relating to desired heights of the crane tool assembly in different scenarios and also include this in the determination of the steering path given as three-dimensional coordinates.

The third example may e.g. be used when removing snow from tilted roof of a building. In this case a rotating brush may be attached to the crane tip as a crane tool, the angle of the rotating brush may then be set to the tilting angle of the roof be the crane operator which would allow the operator to easily follow the plane of the roof with the brush.

In order to determine a steering path of the crane tool assembly, information 24 relating to a current position of the crane tool assembly in the crane base referenced coordinate system is provided from the sensors of the crane arrangement. This information is used along with the desired pointing direction x1 of the direction indicator of the tool in said crane base referenced coordinate system to determine the coordinates of the steering path.

The steering planner 22 may be continuously arranged to receive directional commands indicating right or left displacement, and one or more drive commands to update the steering path accordingly.

The crane controller comprises further an actuator controller 23 arranged to control at least one of said plurality of actuators to execute movement according to the determined steering path of the crane tool assembly. The actuator controller 23 is characteristically arranged to control at least one of said plurality of actuators to control execution of the movement according to the determined steering path of the crane tool assembly using at least some of the sensor information or otherwise obtained information 24. Thus, the actuator controller is arranged to obtain information relating to at least some of the following
- the extension/retraction state of the at least one extendable/retractable crane boom,
- the slewing angle, v1, of the crane pillar,
- the pivotal angle, v2, between the crane pillar and the crane boom system,
- the pivotal angle, v3, between the crane booms pivotally arranged in relation to each other (when there are more than two crane booms pivotally arranged in relation to each other, information relating to all pivotal angle, v3, is obtained), and
- the rotational position, v5, of the tool around its rotation axis, *z_r,*

In detail, the actuator controller 23 is arranged to receive from the steering planner 22 the one or more positions along the pointing direction to the next target position, said position being given as two-dimensional or three-dimensional coordinates as explained above. The actuator controller 23 is further arranged to determine instructions for the respective actuators of the crane arrangement 2 to execute movement of the crane tool arrangement along the movement path given by the one or more positions. The determined instructions are then transmitted to the respective actuators of the crane arrangement. This type of actuator controllers 23 determining instructions for control of actuators is well known in the art. The technology used is referred to as "inverse kinematics", referring to a process of obtaining joint angles from known coordinates.

In an extended example, the actuator controller 23 may be arranged to further control at least one of said plurality of actuators to adjust the rotational position, v5, of the tool around its rotation axis, *z_r,* during movement of the crane tool assembly along the commanded desired pointing direction, x1, of the direction indicator of the tool to always point along the steering path.

As a further extended example the angle v6 of the tool assembly 10 relative to the boom of the crane tip may be further controlled by an actuator and the actuator controller 23.

In accordance with this extended example, the orientation of the tool may form part of the inverse kinematic calculations as performed by the actuator controller. Accordingly, the orientation of the tool can be adjusted while moving along the pointing direction to always point in the direction of movement as a default. Hence there will be a dynamic direction setting for the tool angle. In addition to the adjustment to the orientation of the tool performed by the actuator controller 23, the operator can command if to move right or left compared to the default direction and in this way control the direction of movement of the crane tip and crane tool assembly.

In the illustrated example, the crane controller comprises an interface 21 providing the directional commands and the drive commands to the steering planner 22.The interface comprises in an example an operator interface. The operator interface may comprise one or more input command means such as joysticks, levers, buttons, rotating knobs etc. on an operator panel. The operator interface may be implemented in a remote control unit. The operator interface may be software-implemented on a device, such as a touch screen display or an app of a user control device.

The operator interface 21 has a first input command means operable for the drive command for the movement of the crane tool arrangement, and a second input command means operable for the directional command for the rotational displacement of the tool around its rotation axis, z_r.

For example, the operator interface may comprise a lever for control of forward/reverse movement and the speed. Alternatively, the speed command is provided from a separate command means.

Further, the operator interface may comprise a manipulator for height adjustment of the steering path. Thus, the height may be adjusted using a second directional command.

Further, the operator interface may comprise a manipulator for adjustment of a tilt of the movement plane. Thus, an angle to the horizontal plane may then be adjusted using a third directional command.

Further, the operator interface may comprise manipulators, such as one or more switches, to switch between the first, second and third modes of operation.

As an alternative or in combination, a graphical user interface on a display of the operator interface may list different selectable modes, and the selection may e.g. be made through a touch screen interface or through joysticks, buttons or other user input means known in the art.

In another or complementary example, the interface connects to another system, which provides input to the crane controller.

One or more of the operator interface 21, steering planner 22 and actuator controller 23 may be remotely arranged and communicating wirelessly or via wired communication. Characteristically, at least the operator interface be remotely arranged.

Figures 3 - 6 illustrates an example an operation according to the invention.

In figure 3, a working equipment, for example a working equipment 100 as disclosed in relation to figures 1 and 2 is in an initial position, denoted A in figure 3. In the initial position, the respective pivotal angles v2, v3 slew angle, v1, extension/retraction status of the at least one extendable/retractable crane boom and rotational position of the tool, v5, are characteristically set in initial, positions. The solution as presented herein is characteristically an additional (herein defined as third) operation mode that the operator can choose to activate when appropriate. Thus, in addition to standard crane operation and possibly also as an alternative to standard CTC operation, the additional, third mode of operation can be activated. The initial positions in that sense are the position for when this additional, third mode is activated.

Further, a directional indicator such as an elongated part 11 of a tool 9 is oriented in a forward direction; this forward direction forms in this example the initial position of the tool. Thus, in accordance with this example, the initial rotation angle for the tool is 0°. Once a drive command is activated, the crane tool assembly, is moved forward along a moving path 31 defined by the pointing direction of the elongated part 11 in position A. The drive command is characteristically activated via first input command means at an operator interface. The first input command means is for example a lever or accelerator.

In position B, the tool has been rotated counter-clockwise 90° with respect to the previous direction. The operator has controlled the rotation angle for the tool using a second input command means of the operator interface. The second command means may be integrated with the first command means, such as for a joystick with a rotating knob.

For simplicity a dashed line 32 to the position B illustrates the position of the crane arrangement in this scenario. While the operator uses the first control for forward movement of the crane tip and the crane tool assembly along movement path 33 now defined by the pointing direction of the elongated part 11, the crane controller performs control of the crane arrangement execute the control of the crane tip and hence the crane tool assembly to move forward along the moving path 33.

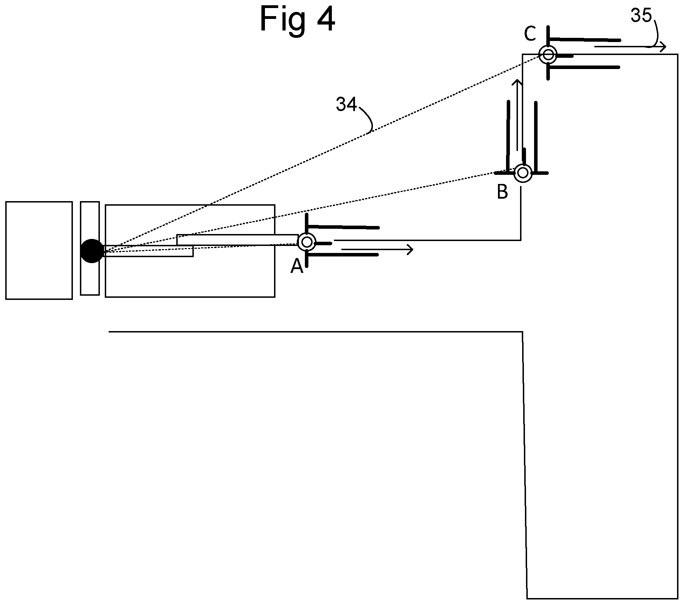

In figure 4, a position C is illustrated wherein the tool has been rotated clockwise 90° with respect to the previous direction. The operator has controlled the rotation angle for the tool using the second input command means of the operator interface.

For simplicity a dashed line 34 to the position C illustrates the position of the crane arrangement in this scenario. While the operator uses the first control for forward movement of the crane tip and the crane tool assembly 10 along movement path 35 now defined by the pointing direction of the elongated part 11, the crane controller performs control of the crane arrangement execute the control of the tool 9 to move forward along the moving path 35.

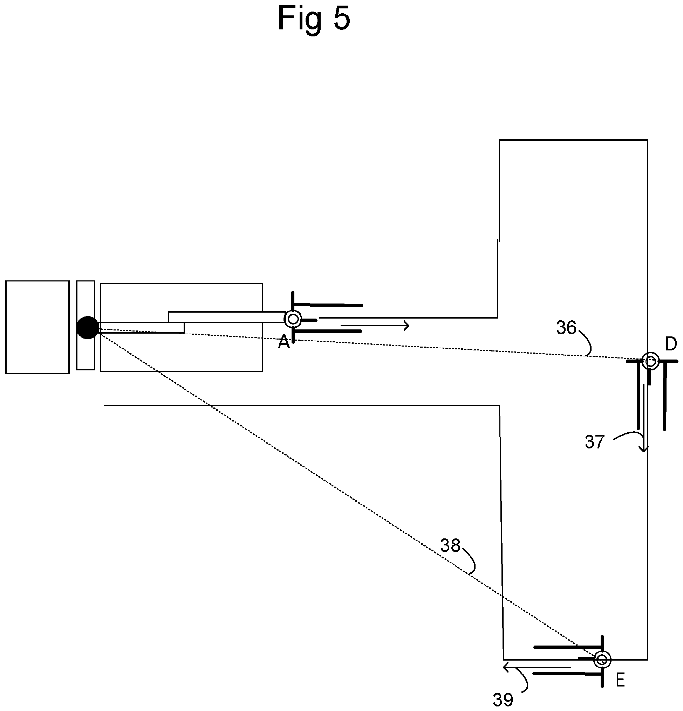

In figure 5, position D is illustrates movement of the tool after a 90° clockwise rotation of the tool in relation to the rotational position in position C. The operator has controlled the rotation angle for the tool using the second input command means of the operator interface.

For simplicity, a dashed line 36 to the position D illustrates the position of the crane arrangement in this scenario. While the operator uses the first input command means for forward movement of the crane tip with the crane tool arrangement along movement path 37 now defined by the changed pointing direction of the elongated part 11, the crane controller performs control of the crane arrangement execute the control of the tool 9 to move forward along the moving path 37.

Further, position E is illustrates movement of the tool after a 90° clockwise rotation of the tool in relation to the rotational position in position D. The operator has controlled the rotation angle for the tool using the second input command means of the operator interface.

For simplicity a dashed line 38 to the position E illustrates the position of the crane arrangement in this scenario. While the operator uses the first input command means for forward movement of the tool 9 along movement path 39 now defined by the changed pointing direction of the elongated part 11, the crane controller performs control of the crane arrangement execute the control of the tool 9 to move forward along the moving path 39.

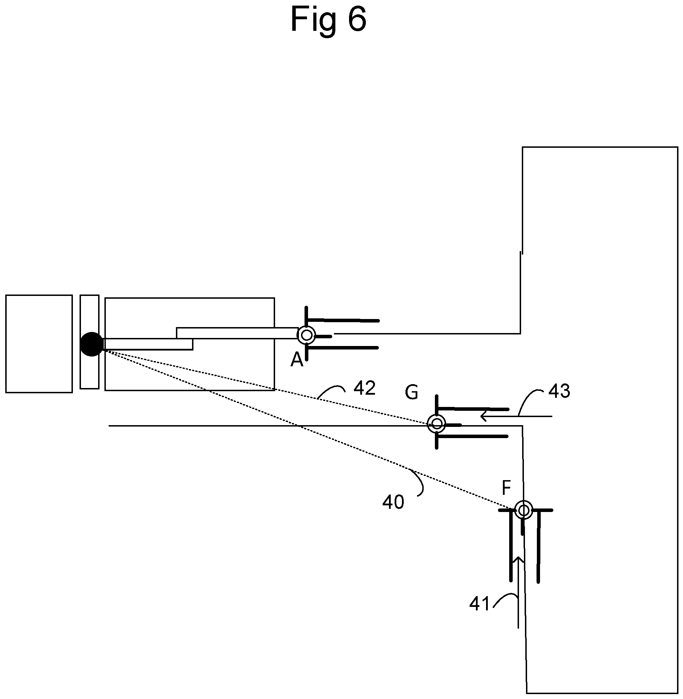

In figure 6, positions F and G are illustrated, where instead movements are made in the backward direction. In position F, the movement of the tool after a 90° counter-clockwise rotation of the tool in relation to the rotational position in position E is illustrated. The operator has controlled the rotation angle for the tool using the second input command means of the operator interface.

For simplicity, a dashed line 40 to the position F illustrates the position of the crane arrangement in this scenario. While the operator uses the first input command means for backward, or reverse, movement of the tool 9 along movement path 41 now defined by the changed pointing direction of the elongated part 11, the crane controller performs control of the crane arrangement execute the control of the tool 9 to move backward along the moving path 41.

Further, position G illustrates a movement of the tool after a 90° clockwise rotation of the tool in relation to the rotational position in position F. The operator has controlled the rotation angle for the tool using the second input command means of the operator interface.

For simplicity a dashed line 42 to the position G illustrates the position of the crane arrangement in this scenario. While the operator uses the first input command means for backward, reverse movement of the tool 9 along movement path 43 now defined by the changed pointing direction of the elongated part 11, the crane controller performs control of the tool 9 to move backward along the moving path 43.

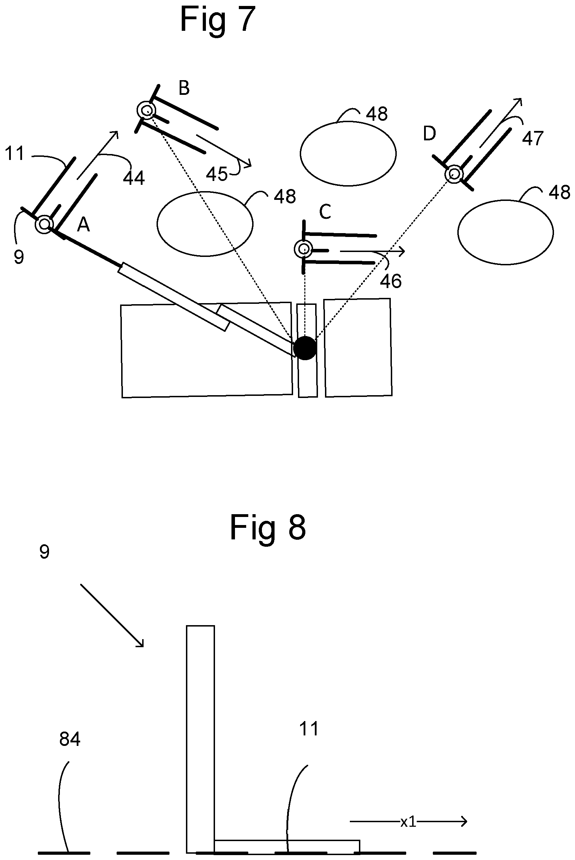

In Figure 7, it is illustrated how the crane tool arrangement 10 can be steered by performing forward or reverse control using the first input command means and tool rotation using the second input command means. In this way, the tool is steered between waypoints A-B-C-D to avoid obstacles 48. In point A the tool is steered forward along movement path 44. In point B, the tool is steered forward along movement path 45. In Point C, the tool is steered forward along movement path 46. In point D, the tool is steered forward along movement path 47.

Figure 8 illustrates to term "movement plane" as used herein. In the illustrated example, the desired pointing direction X1 as defined by the direction indicator 11 defines the movement plane, here referenced 84. In this example the movement plane is a horizontal movement plane. In another example, the movement plane is a tilted movement plane. An angle to the horizontal plane may then be adjusted using a third directional command.

A height of the movement plane 84 may be adjusted using a second directional command.

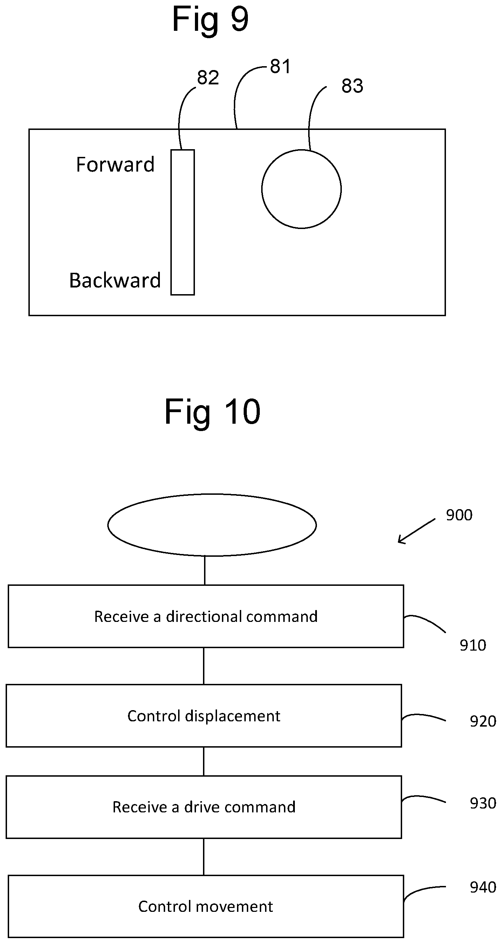

Figure 9 illustrates schematically an operator interface 81, for example implemented as a remote control unit, for control of a crane tool assembly of a crane arrangement as defined in above. The operator interface comprises
a first input command means 82 for drive commands for movement of the crane tool assembly, and
a second input command means 83 for directional commands for rotational displacement of the tool around its rotation axis, z_r,
so as to enable control the crane tool assembly to perform movement according to the drive commands using the first input command means along a desired pointing direction, x1, of the direction indicator of the tool as displaced using the second input command means.

The first and/or second input command means may comprise a lever or joystick or button. Different designs of the operator interface are also discussed with reference to previous figures.

Figure 10 illustrates an example method 900 for control of movement of a crane tool assembly of a crane arrangement as disclosed herein. The method comprises
receiving 910 a directional command for rotational displacement of the tool around its rotation axis, z_r, from an initial pointing direction, x0, of the direction indicator of the tool and
controlling 920 at least one of said plurality of actuators to perform displacement of the tool around its rotation axis, *z*_*r* according to the directional command to a desired pointing direction, x1, of the direction indicator,
receiving 930 a drive command for movement of the crane tool assembly, and
controlling 940 at least one of said plurality of actuators to perform movement of the crane tool assembly along the desired pointing direction, x1, of the direction indicator of the tool.

The method 900 is not necessarily carried out in sequence as presented. For example some of the steps may be carried out in parallel. Such scenarios are for example explained in relation to figure 2.

## Claims

1. A crane arrangement (2) comprising
a crane base (7);
a crane pillar (8) rotatably arranged to the crane base (7),
a crane boom system (3) comprising a plurality of crane booms (4, 5) pivotally arranged in relation to each other, said crane boom system (3) having a first end (13) pivotally arranged at an end of the crane pillar (8) and a second, free end (14), wherein at least one of the plurality of crane booms (4, 5) is extendable/retractable,
a crane tool assembly (10) arranged at the second, free end (13) of the crane boom system (3);
a plurality of actuators (6) arranged to
control extension/retraction of the at least one extendable/retractable crane boom,
control a rotational position, v5, of the tool around its rotation axis, *z_r,*
control a slewing angle, v1, of the crane pillar,
control a pivotal angle, v2, between the crane pillar and the crane boom system, and
control a pivotal angle, v3, between the crane booms (4, 5)pivotally arranged in relation to each other,;
wherein said crane tool assembly (10) comprises a tool (9) having a direction indicator (11),
said crane arrangement (2) further comprising
a crane controller (200) for control of movement of the crane tool assembly (10) arranged at the second, free end of the crane boom system, said crane controller being arranged to receive a directional command for rotational displacement of the tool around its rotation axis, z_r, from an initial pointing direction, x0, of the direction indicator (11) of the tool (9) and to based thereon control at least one of said plurality of actuators to perform displacement of the tool around its rotation axis, *z*_*r* according to the directional command to a desired pointing direction, x1, of the direction indicator, said crane controller further being arranged to receive a drive command for movement of the crane tool assembly and to control at least one of said plurality of actuators to perform movement of the crane tool assembly along the desired pointing direction, x1, of the direction indicator (11) of the tool (9).

2. The crane arrangement (2) according to claim 1, wherein the crane controller (200) is arranged to control the crane tool assembly to perform a forward movement or to perform a reverse movement along the desired pointing direction of the direction indicator (11)., wherein optionally the drive command indicates either forward movement or reverse movement and wherein the crane controller is arranged to control the crane tool assembly to perform a forward movement or to perform a reverse movement according to the drive command.

3. The crane arrangement according to any of the preceding claims, wherein the drive command also comprises a speed indication, and wherein the crane controller is arranged to control the crane tool assembly to perform movement according to the speed indication.

4. The crane arrangement according to any of the preceding claims, said crane controller (200) being arranged to perform in sequence
receiving the directional command for rotational displacement of the tool around its rotation axis, z_r, and to based thereon control at least one of said plurality of actuators to perform the displacement of the tool according to the directional command to the desired pointing direction, x1, of the direction indicator, and
thereafter, upon receipt of a drive command, to control at least one of said plurality of actuators to perform movement of the crane tool assembly along the desired pointing direction, x1, of the direction indicator (11) as long as the drive command for movement along the desired pointing direction is active.

5. The crane arrangement according to claim 4, wherein the said crane controller (200) is arranged to receive a further directional command for rotational displacement of the tool around its rotation axis, z_r, to an updated desired pointing direction, x2, and to based thereon control at least one of said plurality of actuators to perform the commanded displacement to the updated desired pointing direction, x2, of the direction indicator, wherein said crane controller is arranged to activate control of the crane tool assembly to perform the movement along the updated desired pointing direction, x2, of the direction indicator (11) of the tool (9) at initiation of a further drive command activated after inactivation of the previously active drive command, and to continue the movement along the updated desired pointing direction, x2, as long as the further drive command is active.

6. The crane arrangement according to claim 5, wherein the crane controller (200) is arranged to receive the further drive command for rotational displacement of the tool around its rotation axis, z_r, to the updated desired pointing direction, x2, while the drive command for movement along the desired pointing direction is still active and to optionally also based thereon control at least one of said plurality of actuators to perform the commanded displacement to the updated desired pointing direction, x2, of the direction indicator while the previous drive command is still active.

7. The crane arrangement according to any of the claims 1-3, said crane controller (200) being arranged to continuously receive directional commands for rotational displacement of the tool around its rotation axis, z_r, and to based thereon continuously control at least one of said plurality of actuators to perform the commanded rotational displacement to the corresponding desired pointing direction, x1, of the direction indicator, and to continuously control the crane tool assembly to perform the movement along the currently desired pointing direction of the direction indicator (11) of the tool (9) as long as the drive command is active.

8. The crane arrangement according to any of the preceding claims, wherein the crane controller (200) further comprises
a steering planner (22) arranged to receive the directional commands and to optionally receive the drive commands, and to determine a steering path of the crane tool assembly, said steering path comprising one or more positions along the desired pointing direction of the direction indicator of the tool, and
an actuator controller (23) arranged to control at least one of said plurality of actuators to execute movement according to the determined steering path of the crane tool assembly.

9. The crane arrangement according to claim 9, wherein the actuator controller (23) is arranged to further control at least one of said plurality of actuators to adjust a rotational position, v5, of the tool around its rotation axis, *z_r,* during movement of the crane tool assembly along the commanded desired pointing direction, x1, of the direction indicator (11) of the tool (9) to always point along the steering path.

10. The crane arrangement according to claim 10, wherein the steering planner (22) is continuously arranged to receive directional commands indicating right or left displacement and to update the steering path accordingly.

11. The crane arrangement according to any of the proceeding claims, wherein the crane controller comprises an operator interface (82) having a first input command means (82) operable for the drive command for the movement of the crane tool arrangement, and a second input command means (83) operable for the directional command for the rotational displacement of the tool around its rotation axis, z_r.

12. The crane arrangement according to any of the preceding claims, wherein the direction indicator (11) is an elongated part, wherein optionally the elongated part forms part of the functional components of the tool or wherein optionally the elongated part (11) is a separate part mounted to the tool to define the pointing direction of the tool.

13. The crane arrangement according any of the preceding claims, wherein the crane tool assembly (10) comprises a sensor arranged to sense the rotational position of the tool around its rotation axis, *z_r.*

14. A remote control unit comprising an operator interface (81) for control of a crane tool assembly of a crane arrangement as defined in any of the preceding claims, said operator interface comprising
a first input command means (82) for drive commands for movement of the crane tool assembly, and
a second input command means (83) for directional commands for rotational displacement of the tool around its rotation axis, z_r,
so as to enable control the crane tool assembly to perform movement according to the drive commands using the first input command means along a desired pointing direction, x1, of the direction indicator (11) of the tool (9) as displaced using the second input command means.

15. A method for control of movement of a crane tool assembly of a crane arrangement (2), said crane arrangement comprising
a crane base;
a crane pillar rotatably arranged to the crane base,
a crane boom system comprising a plurality of crane booms (4, 5 ) pivotally arranged in relation to each other, said crane boom system having a first end pivotally arranged at an end of the crane pillar and a second, free end, wherein at least one of the plurality of crane booms is extendable/retractable,
a crane tool assembly (10) arranged at the second, free end of the crane boom system;
a plurality of actuators arranged to
control extension/retraction of the at least one extendable/retractable crane boom,
control a rotation of the tool around its rotation axis, *z_r,*
control a slewing angle, v1, of the crane pillar,
control a pivotal angle between the crane pillar and the crane boom system,
control a pivotal angle, v3, between the crane booms (4, 5) pivotally arranged in relation to each other; and
wherein said crane tool assembly (10) comprises a tool (9) having an direction indicator (11),
said method comprising
receiving a directional command for rotational displacement of the tool around its rotation axis, z_r, from an initial pointing direction, x0, of the direction indicator (11) of the tool (9) and
controlling at least one of said plurality of actuators to perform displacement of the tool around its rotation axis, *z*_*r* according to the directional command to a desired pointing direction, x1, of the direction indicator,
receiving a drive command for movement of the crane tool assembly, and
controlling at least one of said plurality of actuators to perform movement of the crane tool assembly along the desired pointing direction, x1, of the direction indicator (11) of the tool (9).
